# EUROPEAN PATENT SPECIFICATION

(11) **EP 4 144 785 B1**
(45) Date of publication and mention of the grant of the patent: **24.04.2024**
(21) Application number: 22184941.7
(22) Date of filing: 14.07.2022
(51) Int. Cl.: C08J 11/04, C08J 11/06

(54) **A METHOD OF RECYCLING TEXTILE WASTE CELLULOSE**
VERFAHREN ZUR WIEDERVERWERTUNG VON TEXTILABFÄLLEN AUS ZELLULOSE
PROCÉDÉ DE RECYCLAGE DE CELLULOSE DE DÉCHETS TEXTILES

(30) Priority: 01.09.2021 SG 10202109553V
(43) Date of publication of application: 08.03.2023
(73) Proprietor: Asia Pacific Resources International Holdings Ltd, HM11 Hamilton (BM)
(72) Inventor: GINTING, Eduward, 048624 Singapore (SG); ANTES, Rudine, 048624 Singapore (SG); YING, H'ng Yin, 048624 Singapore (SG); PANDITA, Surya Darma, 048624 Singapore (SG)
(74) Representative: Boult Wade Tennant LLP

(56) References cited:
- EP-A1- 3 670 010
- CN-A- 107 572 697
- CN-A- 110 106 594
- CN-A- 111 630 217
- CN-A- 112 759 184
- US-B2- 10 501 599
- Zoan I Negulescu ET AL: "Recycling Cotton from Cotton/ Polyester Fabrics", Textile Chemist and Colorist, 1 June 1998 (1998-06-01), pages 31-35, XP055305945, Retrieved from the Internet: URL:http://infohouse.p2ric.org/ref/31/3059 7.pdf [retrieved on 2016-09-27]

## Description

### Technical Field

The present invention relates to a method of recycling waste textile as feedstocks for man-made cellulose fibers production. In particular, a method of recycling cellulose from these feedstocks to produce cellulose pulp which achieves dissolving pulp specifications and characteristics as a textile fibre feedstock. Specifically, the method comprises treating a waste textile feedstock comprising at least 50 wt% cellulose with an aqueous alkali solution followed by an aqueous acid solution. The present invention also relates to the use of used aqueous alkali and used aqueous acid solutions for recycling textile waste cellulose. In particular, the use of an alkali solution obtained from the manufacture of viscose process and an acid solution obtained from the manufacture of paper pulps. Thus there is identified a particular synergy between the simultaneous operation and integration of these processes, whereby by-products of the viscose process and paper pulps manufacturing processes may be utilised to recycle textiles.

### Background

There is an ever increasing global demand for textiles, not least due to the increase in global population. There is also an increasing demand for apparel in many countries with growing trends towards so-called "fast fashion" which refers to the mass production of low cost apparel designed to have a limited lifespan. There are limited options available for recycling textiles and therefore, a vast majority of textiles end up being discard in landfill or incinerated. Efforts are being made to increase the recycling rate of textiles. For example, the EU Waste Directive will impose an obligation for EU Member States to collect waste textiles separately by 2025. Therefore, post-consumer textiles are widely available, and will likely become ever more available. Beyond sorting and encouraging re-use of textiles which have not reached the end of their life (for example, where textiles are discarded due to fast changing fashion trends rather than no longer being usable), there remains a need for suitable methods which enable the recycling of waste textiles into new textile products of equal quality.

Waste Management & Research 2019, 37(2), 112-119 "Textile recycling processes, state of the art and current development: A mini review" provides an overview of available recycling methods.

In view of the ecological impacts, there is a rapidly growing trend towards sustainable practices. Accordingly, it is also of growing importance to consumers that their clothing and apparel is manufactured minimising, and ideally avoiding waste, utilising recycled products wherever possible. Whilst it is known that textiles such as cotton may be recycled (specifically down-cycled) into lower grade products, such as rags and insulation material, it remains paramount that textiles are able to be recycled so as to provide a textile of substantially equivalent quality thereby enabling a truly circular textile economy. One of the main problems is the use of fibre blends; that is textiles which are formed from two or more types of fibres spun together. These can include blends of both synthetic and natural fibres, such as polyester and cotton.

"Towards Recycling of Textile Fibers - Separation and Characterization of Textile Fibers and Blends" by Anna Peterson, Master's thesis in Materials Chemistry and Nanotechnology, Chalmers University of Technology, Gothenburg, Sweden 2015 discloses a pretreatment process to separate polyester in cotton textiles.

US 2016/369456 A1 relates to methods and systems for processing cellulose-containing materials and isolating cellulose molecules. A multi-stage process is disclosed in which cellulose-containing feed material is subjected to one or more pretreatment stages, followed by a pulping treatment, to isolate cellulose molecules.

WO 2013/124265 A1 discloses a method for the regeneration of cellulose containing materials. The regeneration of cellulose comprises exposing the cellulose containing material to oxygen or a gas mixture comprising oxygen, preferably 0.6 MPa of pure oxygen, together with an alkali aqueous solution at a pH of at least 9, and a temperature of at least 20°C, which is followed by adding at least one organic solvent so as to precipitate the cellulose.

US 2019/140245 A1 relates to methods for recycling cotton and polyester fibres from waste textiles. The methods comprise treating the waste textile material in a subcritical water reactor at a temperature of about 105°C to 190°C, a pressure of about 40 to 300 psi, or both for about 0 to 90 minutes. Where the starting textile material is essentially 100% cotton textile, the method includes depositing the material in a subcritical water reactor at pH 2 to 4 using, for example, 0.05% to 0.1% (v/v) acetic acid at a temperature of 155°C or 175°C.

WO 2020/013755 A1 discloses a process for the separation of the cellulosic part from a raw material composition, in particular, a process that is integrated into an alkaline pulping process, such as the kraft process. The raw material composition as part of the kraft process may comprise a polycotton composition and a lignocellulosic composition (e.g. wood pulp) which is fed to a digester together with a "white liquor" (a solution of sodium hydroxide, sodium sulfide and sodium carbonate) and typically cooked at a temperature of over 140°C. The spent white liquor, known now as a "black liquor", is sent for chemical recovery for recycling the inorganics wherein the smelt of inorganics are used in the preparation of fresh white liquor.

US 2020/165747 A1 relates to a process for recycling cellulose from textile comprising cellulose.

US 2019/338466 A1 relates to the field of regeneration of cellulose fibers from cotton textile waste.

CN 110106594 A relates to multifunctional regenerated cotton yarn and a preparation method thereof.

US 4270914 A relates to methods for mercerizing cellulose as the first step in the viscose process for producing rayon and other such cellulose derivate filaments.

US 2007/167618 A1 is directed to the recycle of caustic and/or acid from the pre-treatment of pulps used in the manufacture of cellulose ester.

US 10501599 B2 relates to a system and method for recycling the components of cotton and polyester from textiles.

EP 3670010 A1 relates to a method for recycling a cellulose raw material from blended textile waste containing at least one cellulose component and at least one synthetic polymer component.

There remains a need for suitable methods which enable the recycling of waste textiles into new textile products of equal quality. Additionally, the remains a need for such methods to be carried out in an environmentally friendly and sustainable way so that a benefit may be obtained from the recycling of said textiles. The present invention was developed at least with the aim of addressing this problem and/or with the aim to provide a commercially useful alternative.

### Description of the invention

In a first aspect of the present invention, there is provided a method of recycling cellulose for use as a textile fibre feedstock, the method comprising:
(i) providing a waste textile feedstock comprising greater than 50 wt% cellulose by weight of the waste textile feedstock;
(ii) shredding the waste textile feedstock to provide a shredded waste textile feedstock comprising fibres which have a fibre length of less than 5 mm;
(iii) mixing the shredded waste textile feedstock with an aqueous alkali solution having a pH of greater than 11 to produce a first mixture;
(iv) filtering the first mixture to obtain an alkali treated shredded waste textile feedstock;
(v) mixing the alkali treated shredded waste textile feedstock with an aqueous acid solution having a pH of less than 5 to produce a second mixture; and
(vi) filtering the second mixture to obtain cellulose
   wherein the aqueous alkali solution is a used aqueous alkali solution obtained from the manufacture of viscose process and/or wherein the aqueous acid solution is a used aqueous acid solution obtained from the manufacture of paper pulp during bleaching stages.

The present disclosure will now be described further. In the following passages, different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

The present invention relates to a method of recycling textile waste cellulose. In particular, a method of recycling cellulose to produce cellulose which is then suitable for use as a textile fibre feedstock. The method enables the recycling of cellulose which is present in waste textiles, for example as pure and mixed materials of cotton (e.g. combed and denim), lyocell and viscose fibres / yarn / tow waste (unstretched wrapping fault during regenerate cellulose from spinneret during viscose process). Specifically, the method described herein isolates cellulose from a cellulose-containing material feedstock (i.e. textiles). Isolation of cellulose is also synonymous herein with separating cellulose from the waste textiles or producing cellulose. As described herein, the cellulose remains in the solid state throughout the process and is purified by the treatment described herein to produce the cellulose suitable for re-use a textile fibre feedstock.

The resulting recycled cellulose may be incorporated into standard processes for producing a textile fibre. In particular, the cellulose produced by the method described herein may be used in the viscose process for the production of viscose fibres, a well-known process in the art. The cellulose in the viscose process generally originates from trees where the trees are cut into wood chips and subjected to a chemical pulp. The pre-hydrolysis kraft process is the most prominent pulping method though other chemical pulping methods such as the sulfite process are also used.

Alternatively, the cellulose may be used as a fibre feedstock material for the lyocell process for the production of lyocell fibres. This process is also well-known. The lyocell process involves the dissolution of cellulose in a solvent (which is almost exclusively NMMO) to provide the dope. This is then dry-spun by pumping the solution through spinnerets into an air-gap before a water based coagulation bath. The viscose process involves xanthation which is the reaction of alkali cellulose with carbon disulphide (CS₂) to provide the dope. This is then wet-spun through spinnerets in an aqueous bath containing sulfuric acid and often sodium sulfate for rapid coagulation and zinc sulfate to cross link the cellulose molecules. Known spinning solutions consist of water, about 1 wt% zinc sulfate, about 18 wt% sodium sulfate, 10 wt% sulfuric acid and about 2 wt% glucose.

Other terminologies are well-known in the art and refer generally to the production of cellulose-containing fibres which may be called "regenerated cellulose fibres". For example, rayon is often used interchangeably with the term viscose. Modal fibres are made using the same chemical process as viscose fibres but are treated physically after fibre production, such as by extra stretching to produce fibres with different textural qualities. Cupro or cupra refers to cellulose fibres obtained from solutions prepared by dissolving cellulose with Schweizer's reagent ([Cu(NH₃)₄(H₂O)₂](OH)₂ and the dope wet-spun through spinnerets in an aqueous bath containing sulfuric acid.

The cellulose recycled and produced by the present method may then be used as the sole cellulose-containing material as a textile fibre feedstock in, for example, the viscose process for forming viscose fibres. Alternatively, it is also preferred that the cellulose is combined with standard cellulose feedstock materials for the viscose process, preferably dissolving wood pulp (which may also be referred to, or known in the art as, dissolving pulp or dissolving cellulose). Preferably, the cellulose recycled and produced by the present method is used in a textile fibre feedstock in an amount of at least 20 wt% of the textile fibre feedstock, preferably at least 50 wt%.

The method comprises providing a waste textile feedstock comprising greater than 50 wt% cellulose by weight of the waste textile feedstock.

The waste textile feedstock material can include a wide range of cellulose-containing materials (cellulosic materials). These include both pre- and post-consumer waste, scrap textiles and fabrics. Advantageously, the present invention may utilise pre- and post-consumer waste as a feedstock material which includes yarn, fibre and fabric scraps from textile manufacture together with used and discarded apparel for recycling. A particular advantage of the present invention is that recycled textiles may again be recycled. The feedstock material may therefore comprise textiles obtained from a textile fibre feedstock produced by the method of the present invention.

The feedstock material may be substantially homogenous having been sorted or derived from a single source. The feedstock material may be heterogeneous such as textiles for recycling from post-consumer waste. Such textiles may be somewhat sorted prior to recycling using the method disclosed herein. For example, non-fibrous or non-cellulosic materials (commonly buttons and zips) may be mechanically removed from the feedstock material, preferably to provide a substantially fibrous feedstock. The waste textile feedstock material may be sorted by cellulose content to remove textiles with significant quantities of non-cellulosic fibres so as to provide a feedstock having at least 50 wt% cellulose. For example, textiles comprising wool are preferable sorted and separated. The feedstock material may be coloured and therefore comprise one or more dyes or other chemical finishes. The material may be sorted into groups of similar colour and/or dye intensity. Similarly, heavily soiled textiles may be removed and/or the feedstock laundered using conventional techniques prior to use in the method disclosed herein.

Preferably, the waste textile feedstock comprises greater than 60 wt% cellulose, preferably greater than 70 wt% cellulose, more preferably greater than 75 wt% cellulose, and even more preferably greater than 80 wt% cellulose. Preferably, the waste textile feedstock further comprises up to 50 wt% of one or more of polyester, polyamide and polyurethane. The waste textile feedstock comprising up to 30 wt% polyester is particularly preferred for the efficient running of the process. It is also preferred that the waste textile feedstock consists essentially of cellulose and one or more of polyester, polyamide and polyurethane. As will be appreciated, the feedstock may comprise dyes and/or other impurities together with unavoidable contaminants which may result from the textile feedstock being a waste feedstock. Preferably, the non-fibrous component of the feedstock is less than 5 wt%, preferably less than 3 wt%, preferably less than 2 wt%, preferably less than 1 wt%.

Preferably, the waste textile feedstock comprises up to 40 wt% of one or more of polyester, polyamide and polyurethane, preferably up to 30 wt%, more preferably up to 20 wt% and even more preferably up to 15 wt%. It is particularly preferred that the waste textile feedstock comprises at least 5 wt% of one or more of polyester, polyamide and polyurethane since the method has been found to be particularly suitable for the regeneration of cellulose from such blended feedstocks. More preferably the waste textile feedstock comprises at least 10 wt% of one or more of polyester, polyamide and polyurethane. As discussed above, waste feedstocks consisting essentially of cellulose and polyester which may be optionally dyed, is particularly preferred.

The method then comprises shredding the waste textile feedstock to provide a shredded waste textile feedstock comprising fibres which have a fibre length of less than 5 mm.

The step of shredding the waste textiles may be carried out using any conventional techniques known in the art. Shredding may also equally refer to chopping, cutting, grinding or pulverising the waste textiles. Shredding is carried out to achieve a fibre length of less than 5 mm. The fibre length may be measured using any conventional technique. Preferably, the fibre length is measured in accordance with method B of ISO 6989:1981 (Textile fibres - Determination of length and length distribution of staple fibres (by measurement of single fibres)).

The present inventors have identified that the particularly short fibre length facilitates the recycling of cellulose by the specific combination of method steps disclosed herein. In particular, the fibre length of less than 5 mm enables the cellulose in waste textiles to be recycled and used as a textile fibre feedstock for subsequent processing using standard techniques for preparing regenerated cellulose fibres (e.g. viscose and/or lyocell), followed by yarns, fabrics and textiles and ultimately consumer apparel. Any of these products comprising cellulose obtained by the method disclosed herein may again be recycled through the method disclosed herein.

Preferably, the shredded waste textile feedstock comprises fibres which have a fibre length of less than 3 mm, more preferably less than 2 mm. Preferably, the shredded waste textile feedstock comprises fibres which have a fibre length of at least 1 mm, for example, from 1 to 5 mm, preferably from 1 to 3 mm, more preferably from 1 to 2 mm.

The inventors have found, without wishing to be bound by theory, that the fibre length as described herein enables improved mixing of the resulting recycled cellulose with dissolving wood pulp for subsequent fibre manufacture (e.g. the viscose or lyocell process). In particular, the inventors have found that the fibre lengths prevent screen blocking during pressing or replacement of using softwood dissolving pulp after the first step of steeping the textile fibre feedstock and dissolving wood pulp in an aqueous alkali solution. When preparing lyocell by the lyocell process, the inventors have also realised that the shorter fibres provide an advantage by reducing the kneader load and improved dissolution. The inventors found that it was necessary to reduce the fibre length to less than 5 mm, and most preferably from 1 to 2 mm so as to reduce the energy required for further processing which is vital for providing environmentally sustainable recycling and manufacturing. One of the problems with recycling (which generally applies to recycling of any material) is that there is a greater cost associated with using a used material feedstock and the additional input required to process used materials when compared to fresh feedstocks upon which an industry is built, developed and optimised without consideration for recycling streams.

The method further comprises mixing the shredded waste textile feedstock with an aqueous alkali solution having a pH of greater than 11 to produce a first mixture. As described herein, the cellulosic component remains in the solid phase and the mixture may therefore be referred to as a dispersion or a suspension for example. The inventors have found that the present method does not require the use of any phase transfer catalyst and preferably, the method does not comprise use of a phase transfer catalyst (for example, the aqueous alkali solution preferably does not comprise a phase transfer catalyst).

An aqueous alkali solution refers to a water-based solution, preferably substantially free of organic solvents. An alkali solution refers to a solution comprising hydroxide (OH-) ions giving the solution a pH of greater than 7. Specifically, the aqueous alkali solution used in the present methods has a pH of greater than 11, preferably a pH of greater than 12, more preferably greater than 14.

Typically, the aqueous alkali solution comprises alkali metal hydroxide, preferably sodium hydroxide and/or potassium hydroxide. Preferably, the aqueous alkali solution comprises from 50 to 250 g/L of alkali metal hydroxide, preferably from 100 to 240 g/L, more preferably from 200 to 230 g/L, even more preferably from 210 to 220 g/L. The concentration of alkali in g/L (grams per litre) may be measured in accordance with SCAN-N 2:88. The concentration is given as "grams of sodium hydroxide per litre", preferably as an effective alkali concentration.

By way of example, where the aqueous alkali solution is a sodium hydroxide solution, the solution preferably comprises at least 5 wt% NaOH by weight of the aqueous alkali solution, preferably greater than 10 wt%, more preferably greater than 15 wt%. Even more preferably, the solution comprises about 18 wt% NaOH, for example from 16 wt% to 20 wt%, or 17 wt% to 19 wt%.

The step of mixing the shredded waste textile feedstock with the aqueous alkali solution preferably comprises mixing at a temperature of from 75°C to 110°C, preferably from 85°C to 105°C. Such a temperature may be achieved after having initially mixed the feedstock and alkali solution by subsequent heating. Alternatively, the shredded feedstock may be added to a pre-heated aqueous alkali solution and the mixture mixed. Preferably the mixing step, in so far as the mixture is at the desired temperature, is carried out for from 30 to 240 minutes, more preferably from 60 to 120 minutes. Preferably, the total mixing time, i.e. at any temperature, is no greater than 240 minutes, preferably no greater than 120 minutes. Preferably, the mixture is cooled to ambient temperature before the mixture is filtered, for example about 20°C.

The present inventors have found that the mixing times and temperatures described herein permit recycling of cellulose from waste textile materials without undue degradation of the cellulose fibres which is imperative for the recycling of cellulose into textiles of substantially equivalent quality as the originally manufactured textile. Significantly greater temperatures additionally require much greater energy input and moreover, at temperatures above about 105°C, suitable apparatus is required to prevent boiling and evaporation of the solution which results in the generation of rapidly increasing pressures. The method of the present invention therefore represents a much more environmentally friendly process which is favoured by consumers.

Furthermore, the present method involves the mixing of shredded waste textiles with an aqueous alkali solution. Accordingly, the method does not involve a prior chemical treatment step of the waste textile feedstock such as an acid degradation step. Such steps are known in the art and result in cellulose disintegration.

The inventors have found that the preferred temperature and time of mixing the shredded waste textile feedstock with the aqueous alkali solution as described herein is particularly suited when combined with the preferred pH of at least 12, and even more so with a pH of at least 14.

The inventors have found that the preferred ratio of shredded waste textile feedstock to aqueous alkali solution, by weight, is from 1:5 to 1:40, preferably from 1:7.5 to 1:30, more preferably from 1:10 to 1:20. In other words, the shredded waste textile feedstock is preferably added in an amount of at least 2.5 wt%, by weight of the aqueous alkali solution, preferably at least 3.3 wt%, more preferably at least 5 wt%, and/or at most 20 wt%, preferably at most 13.3 wt%, more preferably at most 10 wt%.

The step of mixing the shredded textile in alkali results in disintegration of the non-cellulosic fibres, amongst other contaminating impurities present in waste textiles. In particular, the present inventors have found that the process conditions described herein enable the removal of wax and other contaminants from the textiles surface. The process serves to moderately reduce the cellulose viscosity.

After mixing, the cellulosic component of the shredded waste textile feedstock remains in the solid phase and may be filtered from the aqueous alkali solution as described herein, the aqueous alkali solution having dissolved the contaminating impurities and non-cellulosic fibres. Accordingly, the present invention is particularly suited to recycling blends of cellulose and polyester, for example textiles described as polycotton which are blends of cotton and polyester. The solid phase cellulose may also be referred to as a cellulose or cellulosic pulp.

In a particularly preferred embodiment of the present invention, the aqueous alkali solution is a used aqueous alkali solution obtained from the manufacture of viscose.

During the manufacture of viscose, in other words when carrying out the viscose process, the first step is one of steeping (which can be referred to as mercerisation). The native crystalline form of cellulose is referred to a cellulose I and this can be extracted from wood and cotton. In cellulose I the cellulose chains are aligned parallel to one another with reducing ends pointed in the same direction. Cellulose II is the crystalline form of regenerated cellulose. The transformation from cellulose I to cellulose II can be initiated by steeping in concentrated alkali whereby cellulose II comprises cellulose chains aligned anti-parallel to one another which is known to provide improved intermolecular hydrogen bonding and is therefore the thermodynamically stable form.

The steeping of cellulose in alkali gives rise to alkali cellulose (or sodium cellulose) which may then be reacted with carbon disulphide to form the xanthate. Prior to the addition of CS₂, the aqueous alkali solution is first filtered from the alkali cellulose, for example by pressing the mixture. The inventors have found that the use of this used alkali solution filtered from the steeped cellulose is particularly preferred in the present method. The used aqueous alkali solution is typically also a sodium hydroxide solution in the concentrations described above though further comprises various by-products of steeping wood pulp. Not least the used aqueous alkali solution, comprises dissolved hemi-celluloses, the cellulose having been swollen by the steeping/mercerisation but not dissolved. Accordingly, it may also be said that it is preferred that the aqueous alkali solution used in the present invention is a waste steeping solution, recycled steeping solution, recycled steeping lye or the like.

The present inventors have found that the use of such an aqueous alkali solution in combination with the other steps described herein, particularly when the shredded waste textile feedstock which comprises fibres having a length of less than 5 mm is mixed with the used solution at the preferred temperatures and/or times, the recycled aqueous alkali solution from the viscose process enables the recycling of waste textiles comprising at least 50 wt% cellulose. Specifically, the recycled cellulose is of sufficient quality so as to enable the production of as-new fibres, yarns and textiles. As will be appreciated, the recycling of an otherwise spent solution improves the overall efficiency of the total processing. As is common in the art, the alkali may ultimately be recovered from the spent alkali solution using more energy intensive processes to remove the water and degrade the organic components leaving an inorganic residue from which fresh alkali solution can be prepared.

The method further comprises a step of filtering the first mixture to obtain an alkali treated shredded waste textile feedstock. The alkali treated shredded waste textile feedstock is the solid phase of the first mixture and filtering separates the solid phase from the alkaline liquid phase. The filtering may be carried out using conventional filtering techniques which may include the use of positive pressure and/or vacuum. In one preferred embodiment, the filtering is conducted by pressing to remove the excess liquid phase.

Preferably, the method further comprises a step of washing the alkali treated shredded waste textile feedstock, preferably to a pH of from 7 to 8.

The step of filtering may be carried out substantially simultaneously such that the method comprises filtering the first mixture and washing the alkali treated shredded waste textile feedstock. The washings are equally filtered from the solid phase and may be repeated as desired to achieve a pH of the alkali treated shredded waste textile feedstock of from 6.5 to 8.5, preferably from 7 to 8. Preferably, water having a substantially neutral pH of about 7 may be used as the washing solvent though other washing solvents which are weakly acidic may be used (e.g. a pH of from about 5 to about 7).

The method preferably further comprises a step of shredding the filtered product so as to facilitate the subsequent mixing step with the aqueous acid solution.

The method then comprises mixing the alkali treated shredded waste textile feedstock with an aqueous acid solution having a pH of less than 5 to produce a second mixture. Preferably, the aqueous acid solution has a pH of less than 4 and/or at least 1, preferably at least 2. Accordingly, the pH of the aqueous acid solution may preferably be from 1 to 5, 1 to 4, 2 to 5, or preferably from 2 to 4.

Commonly available aqueous acid solutions which are preferred include hydrochloric acid, nitric acid, sulfuric acid, formic acid, acetic acid and benzoic acid. Aqueous sulfuric acid and/or hydrochloric acid are preferred, sulfuric acid is particularly preferred.

Preferably, the concentration of acid in the aqueous solution (i.e. water as a solvent preferably substantially free of organic solvents), is at least 0.5 wt%, preferably about 1 wt% by weight of the aqueous acid solution and/or at most 5 wt%, preferably at most 3 wt%, preferably at most 2 wt%, for example from 0.5 wt% to 2 wt% or 0.5 wt% to 1.5 wt%.

Preferably, mixing the alkali treated shredded waste textile feedstock with the aqueous acid solution comprises mixing at a temperature of up to 80°C, preferably up to 60°C, and/or at a temperature of at least 30°C. For example, it is preferred that the temperature is from ambient temperature up to 80°C, which may be considered to be from 20°C to 80°C. Preferably, the temperature is from 20°C to 60°C.

Preferably, mixing the alkali treated shredded waste textile feedstock with the aqueous acid solution is carried out for from 15 to 90 minutes, preferably from 30 to 90 minutes, more preferably from 30 to 60 minutes.

The inventors have found that the preferred mixing temperatures and times as described herein, particularly in combination the preferred temperatures and times for the alkali mixing, enable the production of cellulose from recycled textiles suitable for re-use as a textile fibre feedstock. The inventors have found that the preferred embodiments as described herein are markedly advantageous when using a cellulose feedstock which has been shredded to a fibre length of less than 5 mm. The inventors have found that the acid treatment of the alkali treated shredded waste textile feedstock advantageously reduces the viscosity of the cellulosic pulp, removes left over substances which carry over from the alkali treatment, and also increases the brightness which enables continuous recycling of the cellulose fibres. It has also been found that this step facilities the dissolution of degraded polyester products which remain attached the solid cellulosic pulp (i.e. the filtered alkali treated shredded waste textile feedstock).

Preferably, the aqueous acid solution comprises an oxidant, preferably wherein the oxidant is elemental chlorine free (ECF) and preferably one or more selected from the group consisting of hydrogen peroxide, peracetic acid, benzoyl peroxide, ozone, chloramine, chlorine dioxide, and alkali metal salts of peroxide, perborate, percarbonate, persulfate, permanganate, dithionite and hypochlorite, preferably wherein the oxidant is one or more of chlorine dioxide and sodium hypochlorite.

The addition of an oxidant to the aqueous acid solution is preferred where the waste textile feedstock comprises dyed textiles. The oxidant may be selected so as to bleach the dye in order to provide a white coloured product for subsequent re-use as a textile fibre feedstock.

By way of example, chlorine dioxide (ClO₂) is preferably added as an oxidant, particularly for moderately dyed textiles, and may be added in an amount of from 5 to 50 kg/t (i.e. ClO₂ consumption per ton of recycled pulp), preferably from 10 to 30 kg/t. Alternatively, sodium hypochlorite (NaClO) is preferably added as an oxidant, particularly for heavily dyes textiles. Preferably, NaClO is added in an amount of at least 0.1 g/L, preferably at least 0.2 g/L and/or up to 5 g/L, preferably up to 2 g/L, for example about 0.5 g/L.

The inventors have found that the preferred ratio of the alkali treated shredded waste textile feedstock to aqueous acid solution, by weight, is from 1:5 to 1:40, preferably from 1:7.5 to 1:30, more preferably from 1:10 to 1:20. In other words, the alkali treated shredded waste textile feedstock is preferably added in an amount of at least 2.5 wt%, by weight of the aqueous acid solution, preferably at least 3.3 wt%, more preferably at least 5 wt%, and/or at most 20 wt%, preferably at most 13.3 wt%, more preferably at most 10 wt%.

In a particularly preferred embodiment of the present method, the aqueous acid solution is a used aqueous acid solution obtained from the manufacture of paper pulp.

During the manufacture of paper pulp, in other words when producing paper from wood pulp, the wood pulp is bleached using an aqueous sulfuric acid (H₂SO₄) solution comprising an oxidant during bleaching D0/D1/D2 stages. The bleaching step in paper pulp production serves to extract more lignin which may remain in the wood pulp during the paper pulp processing steps. Accordingly, the recycled used aqueous acid solution obtained from paper manufacture comprises additional components such as lignin and the present inventors were surprised to find that such as waste steam from paper processing, which otherwise is sent for effluent treatment, may be used in the method described herein thereby minimising overall energy and raw material consumption providing a more economical and environmentally friendly process.

The method further comprises filtering the second mixture to obtain cellulose. This second filtering step may be carried out in substantially the same way as the first filtering step described herein and affords the recycled and regenerated cellulose product which is suitable for use as a textile fibre feedstock. Similarly, the method preferably further comprises washing the cellulose, preferably to a pH of from 6 to 8. Preferably, water having a substantially neutral pH of about 7 may be used as the washing solvent though other washing solvents which are weakly alkaline may be used (e.g. a pH of up to about 8).

Advantageously, the inventors have found that the present method provides a recycled cellulose product having a viscosity of from 400 to 600 mL/g as measured in accordance with ISO 5351 :2010. Additionally, the resulting product advantageously achieves a brightness of greater than 89% as measured in accordance with ISO 2470-1:2016.

Accordingly, in view of the foregoing, particularly preferred embodiments of the method disclosed herein comprise:
(i) providing a waste textile feedstock comprising greater than 80 wt% cellulose and at least 5 wt% of one or more of polyester, polyamide and polyurethane, each by weight of the waste textile feedstock;
(ii) shredding the waste textile feedstock to provide a shredded waste textile feedstock comprising fibres which have a fibre length of from 1 to 2 mm;
(iii) mixing the shredded waste textile feedstock with an aqueous alkali solution having a pH of greater than 12 at a temperature of at least 75°C for from 60 to 120 minutes to produce a first mixture;
(iv) filtering the first mixture to obtain an alkali treated shredded waste textile feedstock;
(v) mixing the alkali treated shredded waste textile feedstock with an aqueous acid solution having a pH of from 2 to 4 to produce a second mixture; and
(vi) filtering the second mixture to obtain cellulose.

Another preferred embodiment comprises:
(i) providing a waste textile feedstock comprising greater than 50 wt% cellulose (preferably greater than 80 wt%) and from 5 wt% to 50 wt% polyester (preferably from 5 wt% to 20 wt%), each by weight of the waste textile feedstock;
(ii) shredding the waste textile feedstock to provide a shredded waste textile feedstock comprising fibres which have a fibre length of from 1 to 2 mm;
(iii) mixing the shredded waste textile feedstock with an aqueous alkali solution having a pH of greater than 14 at a temperature of 85°C to 105°C for from 60 to 120 minutes to produce a first mixture;
(iv) filtering the first mixture to obtain an alkali treated shredded waste textile feedstock;
(v) mixing the alkali treated shredded waste textile feedstock with an aqueous acid solution having a pH of from 2 to 4 at a temperature of up to 50°C for from 30 to 60 minutes to produce a second mixture; and
(vi) filtering the second mixture to obtain cellulose;
   wherein the aqueous alkali solution is a used aqueous sodium hydroxide solution obtained from the manufacture of viscose (e.g. obtained as a waste stream from, for example, a steeping step), and/or
   wherein the aqueous acid solution is a used aqueous sulfuric acid solution obtained from the manufacture of paper pulp (e.g. obtained as a waste stream from, for example, a bleaching step).

It is particularly preferred that both the aqueous alkali solution and aqueous acid solution are used and recycled solutions obtained from viscose and paper pulp production, respectively.

Equally, where the shredded waste textile feedstock comprises dyes, the aqueous acid solution of these preferred embodiments preferably further comprise an oxidant as described herein. An oxidant may be added to the aqueous acid solution when recycled from paper pulp manufacturing.

There is also described herein the use of a used aqueous alkali solution for recycling cellulose, wherein the used aqueous alkali solution is obtained from the manufacture of viscose process.

Whilst it is known that steeping solutions may be used a recycled within the viscose process, it is known that the alkali eventually must be recovered from the spent aqueous alkali steeping solution using a relatively energy intensive process. The present inventors have identified an additional further direct use for an otherwise costly by-product of the viscose manufacturing process thereby reducing the environmental impact of cellulose recycling for textile staple fibers manufacture.

There is also described herein the use of a used aqueous acid solution for recycling cellulose, wherein the used aqueous acid solution is obtained from the manufacture of paper pulp. Equally, the present inventors have found a use for an otherwise undesirable waste stream which requires, time and energy to process in an environmentally friendly manner so as to achieve sustainable manufacturing. The presently disclosed use enables a reduction in the overall cost of the integration or combination of paper pulp manufacture and textile recycling and therefore a reduction in the overall use of energy and raw materials together with reduced processing waste and emissions.

In particular, the present disclosure permits an overall reduction in the total water consumption (i.e. intake of fresh water) of the combined textile recycling and textile fibre production and/or paper pulp manufacture thereby reducing the environmental impacts over known methods.

In yet a further aspect, there is provided a method of manufacturing viscose comprising the method described herein. In particular, the method of manufacturing viscose comprises using cellulose obtained by the method disclosed herein as a textile fibre feedstock. Preferably, the method comprising blending the cellulose with dissolving wood pulp to provide the textile fibre feedstock for the method of manufacturing viscose. The other viscose processing steps may be equivalent to those known in the art thereby producing a recycled textile fibre which may then be used to manufacture yarn and textiles.

In another aspect there is provided a method of manufacturing lyocell comprising the method described herein. In particular, the method of manufacturing lyocell comprises using cellulose obtained the method disclosed herein as a textile fibre feedstock. The cellulose may be used directly as a textile fibre feedstock in a known lyocell process. For example, the recycled and pure cellulose may be dissolved in NMMO with kneading before the resulting dope is spun using conventional techniques

There is also described herein a system for simultaneously recycling cellulose from waste textile feedstocks, manufacturing viscose and/or manufacturing paper pulp, the system comprising apparatus for viscose and/or paper pulp manufacture and apparatus for recycling of cellulose wherein the apparatus are in fluid communication. In other words, the system is a combination of conventional machinery and apparatuses, for example large scale production plants/manufacturing plants, wherein the apparatus for recycling waste textiles is in fluid communication with one or both of the apparatus for manufacturing viscose and manufacturing paper pulp. That is, the system permits manufacture of paper pulp and/or viscose using standard production

techniques and apparatus wherein, the apparatus for viscose steeping is provided in fluid communication with the apparatus for the step of mixing shredded waste textile feedstock as described herein. Alternatively, and preferably additionally, the apparatus for paper bleaching is provided in fluid communication with the apparatus for the step of mixing the alkali treated shredded waste textile feedstock.

Accordingly, the system as described herein permits the simultaneous and synergistic production of recycled cellulose suitable as a textile fibre feedstock together with one or both of viscose fibre and paper pulp, the effluent from the viscose and/or paper pulp production may be directly fed to the apparatus for recycling waste textiles.

Consequently, the present invention also provides, in a further aspect, a method of simultaneously recycling and regenerating cellulose and manufacturing viscose and/or paper pulp, wherein the steeping solution (the aqueous alkali solution) by-product from viscose manufacture is used in the recycling and regeneration of the cellulose from waste textile and/or wherein the bleaching solution (the aqueous acid solution) by-product from paper manufacture is used in the recycling and regeneration of the cellulose from waste textiles.

As discussed above, the recycling of effluent streams from a typical process stream had enabled an overall improvement in the efficiency of the combined processes, preferably all of recycling cellulose, viscose and paper pulp manufacture. In particular, the reliance on fresh raw materials is reduced together with a reduction in the reliance of fresh water thereby reducing the environmental impact from emissions and waste products from the combination of processes.

### Figures

The present invention will now be described further with reference to the following non-limiting Figures, in which:
Figure 1 illustrates an embodiment of the method of the present invention.
Figure 2 shows the cellulosic product of the Examples at various stages of recycling by the method of the present invention.

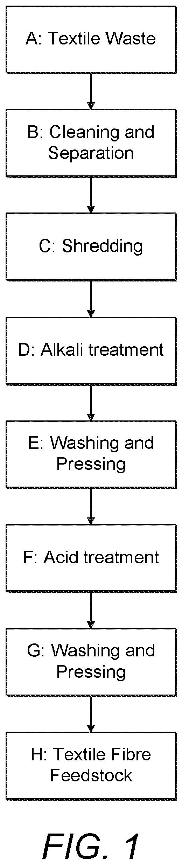

As shown in Figure 1, there is a first step A of providing textile waste. This may be post-consumer waste apparel that has been collected from textile recycling points. This may also be combined with pre-consumer textile waste such as scraps of fabric from apparel manufacturers. The waste textile feedstock, for example a white mixture of cotton and 50 wt% polyester is then cleaned in step B, for example laundered to wash organic contaminants from the textile. The step of cleaning also comprises sorting the waste textile feedstock, either before or after, so as to mechanically remove non-fibrous contaminants such as metals, plastics (for example, zips and buttons). The textiles may also be sorted by colour and dye concentration into feedstocks which are substantially free from dye (i.e. white) and those which are moderately and heavily dyed textiles.

Step C comprises shredding a stream of sorted waste textile feedstock. The textiles are shredded to a fibre length of from 1 to 2 mm. The shredded waste textile feedstock is the added to an aqueous sodium hydroxide solution of about 18 wt% concentration (i.e. pH greater than 14) at ambient temperature of about 20°C with stirring to disperse the shredded textile in the solution. The alkali solution is a recycled alkali solution obtained from viscose processing, specifically is a used steeping lye. The mixture is then heated to about 85°C to 105°C for a total time of 1 to 2 hours completing the alkali treatment step D.

The mixture is then washed with water and pressed in step E until the cellulosic pulp has a pH of from about 7 to about 8. The alkali treated shredded textile feedstock (the cellulosic pulp) is the treated with an aqueous acid solution in step F. Specifically, the acid solution is a recycled acid solution obtained as a waste stream from the bleaching of paper during paper manufacture. The aqueous acid solution comprises1 wt% H₂SO₄, the pH adjusted to from 2 to 4 and the second mixture is then mixed at up to 80°C, for example at ambient temperature of about 20°C, for from 30 to 60 minutes.

The mixture is then washed with water and pressed in step G until the cellulosic pulp has a neutral pH of from about 6 to about 8. The final product H has a viscosity of from 400 to 600 mL/g and a brightness of over 89%.

### Examples

### a) Materials & Chemicals:

i) Textile waste with 100% cotton (denim / combed) or up to 50% polyester mixes (white / color with weak, intermediate & strong dye)
ii) Alkali effluent (recycled steeping lye) from viscose alkalising process (18 wt% NaOH; 216 to 220 g/L)
iii) Acid effluent (recycled acid) from paper pulp bleaching process (1 wt% H₂SO₄)

### b) Methodology:

### • Alkali treatment:

1 kg oven dried (OD) textile waste (shredded and pulverized to a fibre length of from 1 - 2 mm) were put into a reactor vessel with 19 kg of recycled steeping lye. The alkali treatment was conducted at 85 to 105 °C for 60 to 120 minutes.

### • 1^{st} Washing:

After alkali treatment, sample was washed and filtered.

### • Acid Treatment:

Alkali treated textile waste was added with 19 kg of acid solution from the pulp bleaching stage (pH 2 to 4).

### i) White color / color (weak dye)

Acid treatment was performed at room temperature to 60°C for 30 to 60 minutes.

### ii) Color (intermediate dye)

Acid treatment with 20 kg/t ClO₂ was performed at room temperature to 50°C for 30 to 90 minutes.

### iii) Color (strong dye)

Acid treatment was performed at room temperature to 50°C for 30 to 90 minutes followed by treatment with 1.0 g/L NaClO after pH adjustment to pH 5.5 to 6.5 with NaOH.

### • 2^{nd} Washing

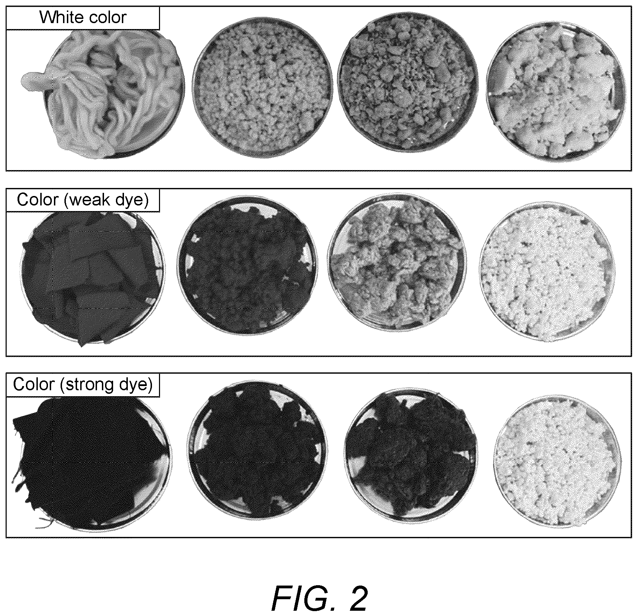

After the acid treatment or bleaching, the treated textile waste was washed (to a pH of from 7 to 8). The final specification of recycled textile waste is a viscosity of 400 to 600 mL/g and ISO brightness of above 89%. The resulting products are shown in Figure 2. From left to right, Figure 2 shows the starting waste textile feedstock, the shredded waste textile feedstock, the washed and filtered alkali treated pulp and the final washed and filtered acid treated pulp as the final recycled cellulose product. As used herein, the singular form of "a", "an" and "the" include plural references unless the context clearly dictates otherwise. The use of the term "comprising" is intended to be interpreted as including such features but not excluding other features and is also intended to include the option of the features necessarily being limited to those described. In other words, the term also includes the limitations of "consisting essentially of" (intended to mean that specific further components can be present provided they do not materially affect the essential characteristic of the described feature) and "consisting of" (intended to mean that no other feature may be included such that if the components were expressed as percentages by their proportions, these would add up to 100%, whilst accounting for any unavoidable impurities), unless the context clearly dictates otherwise.

The foregoing detailed description has been provided by way of explanation and illustration, and is not intended to limit the scope of the appended claims. Many variations of the presently preferred embodiments illustrated herein will be apparent to one of ordinary skill in the art, and remain within the scope of the appended claims.

## Claims

1. A method of recycling cellulose for use as a textile fibre feedstock, the method comprising:
(i) providing a waste textile feedstock comprising greater than 50 wt% cellulose by weight of the waste textile feedstock;
(ii) shredding the waste textile feedstock to provide a shredded waste textile feedstock comprising fibres which have a fibre length of less than 5 mm;
(iii) mixing the shredded waste textile feedstock with an aqueous alkali solution having a pH of greater than 11 to produce a first mixture;
(iv) filtering the first mixture to obtain an alkali treated shredded waste textile feedstock;
(v) mixing the alkali treated shredded waste textile feedstock with an aqueous acid solution having a pH of less than 5 to produce a second mixture; and
(vi) filtering the second mixture to obtain cellulose
wherein the aqueous alkali solution is a used aqueous alkali solution obtained from the manufacture of viscose process and/or wherein the aqueous acid solution is a used aqueous acid solution obtained from the manufacture of paper pulp during bleaching stages.

2. The method according to claim 1, wherein the waste textile feedstock comprises greater than 70 wt% cellulose, preferably greater than 75 wt% cellulose, and/or wherein the waste textile feedstock further comprises up to 50 wt% of one or more of polyester, polyamide and polyurethane, preferably polyester.

3. The method according to claim 2, wherein the waste textile feedstock comprises up to 30 wt% of one or more of polyester, polyamide and polyurethane, preferably up to 20 wt%, preferably up to 15 wt%, and/or the waste textile feedstock comprises at least 5 wt% of one or more of polyester, polyamide and polyurethane, preferably at least 10 wt%.

4. The method according to any preceding claim, wherein the shredded waste textile feedstock comprises fibres which have a fibre length of less than 3 mm, preferably less than 2 mm, and/or the shredded waste textile feedstock comprises fibres which have a fibre length of at least 1 mm.

5. The method according to any preceding claim, wherein the aqueous alkali solution has a pH of greater than 12, preferably greater than 14,, and/or wherein the aqueous acid solution has a pH of less than 4 and/or at least 1, preferably at least 2.

6. The method according to any preceding claim, wherein the aqueous alkali solution comprises alkali metal hydroxide, preferably sodium hydroxide and/or potassium hydroxide, and/or preferably wherein the aqueous alkali solution comprises from 50 to 250 g/L of alkali metal hydroxide, preferably from 100 to 240 g/L, preferably from 200 to 230 g/L, preferably from 210 to 220 g/L.

7. The method according to any preceding claim, wherein step (iii) of mixing the shredded waste textile feedstock with the aqueous alkali solution comprises mixing at a temperature of from 75°C to 110°C, preferably from 85°C to 105°C, and/or wherein step (iii) of mixing the shredded waste textile feedstock with the aqueous alkali solution is carried out for from 60 to 120 minutes.

8. The method according to any preceding claim, wherein step (v) of mixing the alkali treated shredded waste textile feedstock with the aqueous acid solution is carried out for from 30 to 60 minutes and/or comprises mixing at a temperature of up to 80°C, preferably up to 60°C, and/or at a temperature of at least 30°C.

9. The method according to any preceding claim, wherein the aqueous acid solution comprises an oxidant, preferably wherein the oxidant is one or more selected from the group consisting of hydrogen peroxide, peracetic acid, benzoyl peroxide, ozone, chloramine, chlorine dioxide, and alkali metal salts of peroxide, perborate, percarbonate, persulfate, permanganate, dithionite and hypochlorite, preferably wherein the oxidant is one or more of chlorine dioxide and sodium hypochlorite.

10. The method according to any preceding claim, wherein the method further comprises a step of washing the alkali treated shredded waste textile feedstock, preferably to a pH of from 7 to 8,, and/or wherein the method further comprises a step of washing the cellulose, preferably to a pH of from 6 to 8.

11. A method of manufacturing viscose or lyocell textile fibres wherein cellulose obtained by the method of any preceding claim is used as a textile fibre feedstock.

## Patentansprüche

1. Verfahren zur Wiederverwertung von Zellulose zur Verwendung als Textilfaser-Ausgangsmaterial, wobei das Verfahren umfasst:
(i) Bereitstellen eines Textilabfall-Ausgangsmaterials, das mehr als 50 Gew.-% Cellulose, bezogen auf das Gewicht des Textilabfall-Ausgangsmaterials, enthält;
(ii) Zerkleinern des Textilabfall-Ausgangsmaterials, um ein zerkleinertes Textilabfall-Ausgangsmaterial bereitzustellen, das Fasern mit einer Faserlänge von weniger als 5 mm umfasst;
(iii) Mischen des zerkleinerten Textilabfall-Ausgangsmaterials mit einer wässrigen Alkalilösung mit einem pH-Wert von mehr als 11, um ein erstes Gemisch herzustellen;
(iv) Filtern des ersten Gemischs, um ein alkalibehandeltes zerkleinertes Textilabfall-Ausgangsmaterial zu erhalten;
(v) Mischen des alkalibehandelten zerkleinerten Textilabfall-Ausgangsmaterials mit einer wässrigen Säurelösung mit einem pH-Wert von weniger als 5, um ein zweites Gemisch zu erzeugen;
und
(vi) Filtern des zweiten Gemischs, um Cellulose zu erhalten, wobei die wässrige Alkalilösung eine im Viskose-Herstellungsprozess gewonnene gebrauchte wässrige Alkalilösung ist, und/oder wobei die wässrige Säurelösung eine bei der Herstellung von Papierzellstoff während der Bleichstufen gewonnene gebrauchte wässrige Säurelösung ist.

2. Verfahren nach Anspruch 1, bei dem das Textilabfall-Ausgangsmaterial mehr als 70 Gew.-% Cellulose, vorzugsweise mehr als 75 Gew.-% Cellulose, umfasst und/oder bei dem das Textilabfall-Ausgangsmaterial ferner bis zu 50 Gew.-% eines oder mehrerer von Polyester, Polyamid und Polyurethan, vorzugsweise Polyester, umfasst.

3. Verfahren nach Anspruch 2, bei dem das Textilabfall-Ausgangsmaterial bis zu 30 Gew.-%, vorzugsweise bis zu 20 Gew.-%, vorzugsweise bis zu 15 Gew.-%, von einem oder mehreren von Polyester, Polyamid und Polyurethan umfasst und/oder das Textilabfall-Ausgangsmaterial mindestens 5 Gew.-%, vorzugsweise mindestens 10 Gew.-%, von einem oder mehreren von Polyester, Polyamid und Polyurethan umfasst.

4. Verfahren nach einem der vorhergehenden Ansprüche, bei dem das zerkleinerte Textilabfall-Ausgangsmaterial Fasern umfasst, die eine Faserlänge von weniger als 3 mm, vorzugsweise weniger als 2 mm, aufweisen, und/oder das zerkleinerte Textilabfall-Ausgangsmaterial Fasern umfasst, die eine Faserlänge von mindestens 1 mm aufweisen.

5. Verfahren nach einem der vorhergehenden Ansprüche, bei dem die wässrige Alkalilösung einen pH-Wert von mehr als 12, vorzugsweise mehr als 14, aufweist und/oder bei dem die wässrige Säurelösung einen pH-Wert von weniger als 4 und/oder mindestens 1, vorzugsweise mindestens 2, aufweist.

6. Verfahren nach einem der vorhergehenden Ansprüche, bei dem die wässrige Alkalilösung Alkalimetallhydroxid, vorzugsweise Natriumhydroxid und/oder Kaliumhydroxid, umfasst, und/oder bei dem die wässrige Alkalilösung 50 bis 250 g/L Alkalimetallhydroxid, vorzugsweise 100 bis 240 g/L, vorzugsweise 200 bis 230 g/L, vorzugsweise 210 bis 220 g/L, umfasst.

7. Verfahren nach einem der vorhergehenden Ansprüche, bei dem Schritt (iii) des Mischens des zerkleinerten Textilabfall-Ausgangsmaterials mit der wässrigen Alkalilösung das Mischen bei einer Temperatur von 75°C bis 110°C, vorzugsweise von 85°C bis 105°C, umfasst und/oder bei dem Schritt (iii) des Mischens des zerkleinerten Textilabfall-Ausgangsmaterials mit der wässrigen Alkalilösung 60 bis 120 Minuten lang durchgeführt wird.

8. Verfahren nach einem der vorhergehenden Ansprüche, bei dem Schritt (v) des Mischens des alkalibehandelten zerkleinerten Textilabfall-Ausgangsmaterials mit der wässrigen Säurelösung 30 bis 60 Minuten lang durchgeführt wird und/oder das Mischen bei einer Temperatur von bis zu 80°C, vorzugsweise bis zu 60°C, und/oder bei einer Temperatur von mindestens 30°C umfasst.

9. Verfahren nach einem der vorhergehenden Ansprüche, bei dem die wässrige Säurelösung ein Oxidationsmittel enthält, wobei das Oxidationsmittel vorzugsweise eines oder mehrere aus der Gruppe bestehend aus Wasserstoffperoxid, Peressigsäure, Benzoylperoxid, Ozon, Chloramin, Chlordioxid und Alkalimetallsalzen von Peroxid, Perborat, Percarbonat, Persulfat, Permanganat, Dithionit und Hypochlorit ist, wobei das Oxidationsmittel vorzugsweise eines oder mehrere von Chlordioxid und Natriumhypochlorit ist.

10. Verfahren nach einem der vorhergehenden Ansprüche, wobei das Verfahren ferner einen Schritt des Waschens des alkalibehandelten zerkleinerten Textilabfall-Ausgangsmaterials, vorzugsweise auf einen pH-Wert von 7 bis 8, umfasst und/oder wobei das Verfahren ferner einen Schritt des Waschens der Zellulose, vorzugsweise auf einen pH-Wert von 6 bis 8, umfasst.

11. Verfahren zur Herstellung von Viskose- oder Lyocell-Textilfasern, wobei die durch das Verfahren nach einem der vorhergehenden Ansprüche erhaltene Cellulose als Textilfaser-Ausgangsmaterial verwendet wird.

## Revendications

1. Procédé de recyclage de cellulose pour une utilisation comme matière première de fibres textiles, le procédé comprenant :
(i) la fourniture d'une matière première de déchets textiles comprenant plus de 50 % en poids de cellulose par rapport au poids de la matière première de déchets textiles ;
(ii) le déchiquetage de la matière première de déchets textiles pour fournir une matière première de déchets textiles déchiquetée comprenant des fibres qui ont une longueur de fibre inférieure à 5 mm ;
(iii) le mélange de la matière première de déchets textiles déchiquetée avec une solution aqueuse alcaline ayant un pH supérieur à 11 pour produire un premier mélange ;
(iv) la filtration du premier mélange pour obtenir une matière première de déchets textiles déchiquetés traitée par alcalin ;
(v) le mélange de la matière première de déchets textiles déchiquetée traitée par alcalin avec une solution aqueuse acide ayant un pH inférieur à 5 pour produire un deuxième mélange ; et
(vi) la filtration du deuxième mélange pour obtenir de la cellulose
dans lequel la solution aqueuse alcaline est une solution aqueuse alcaline usagée obtenue lors du procédé de fabrication de viscose et/ou dans lequel la solution aqueuse acide est une solution aqueuse acide usagée obtenue lors de la fabrication d'une pâte à papier pendant les étapes de blanchiment.

2. Procédé selon la revendication 1, dans lequel la matière première de déchets textiles comprend plus de 70 % en poids de cellulose, de préférence plus de 75 % en poids de cellulose, et/ou dans lequel la matière première de déchets textiles comprend en outre jusqu'à 50 % en poids d'un ou de plusieurs parmi un polyester, un polyamide et un polyuréthane, de préférence un polyester.

3. Procédé selon la revendication 2, dans lequel la matière première de déchets textiles comprend jusqu'à 30 % en poids d'un ou de plusieurs parmi un polyester, un polyamide et un polyuréthane, de préférence jusqu'à 20 % en poids, de préférence jusqu'à 15 % en poids, et/ou la matière première de déchets textiles comprend au moins 5 % en poids d'un ou de plusieurs parmi un polyester, un polyamide et un polyuréthane, de préférence au moins 10 % en poids.

4. Procédé selon une quelconque revendication précédente, dans lequel la matière première de déchets textiles déchiquetée comprend des fibres qui ont une longueur de fibre inférieure à 3 mm, de préférence inférieure à 2 mm, et/ou la matière première de déchets textiles déchiquetée comprend des fibres qui ont une longueur de fibre d'au moins 1 mm.

5. Procédé selon une quelconque revendication précédente, dans lequel la solution aqueuse alcaline a un pH supérieur à 12, de préférence supérieur à 14, et/ou dans lequel la solution aqueuse acide a un pH inférieur à 4 et/ou d'au moins 1, de préférence d'au moins 2.

6. Procédé selon une quelconque revendication précédente, dans lequel la solution aqueuse alcaline comprend un hydroxyde de métal alcalin, de préférence l'hydroxyde de sodium et/ou l'hydroxyde de potassium, et/ou de préférence dans lequel la solution aqueuse alcaline comprend de 50 à 250 g/l d'un hydroxyde de métal alcalin, de préférence de 100 à 240 g/l, de préférence de 200 à 230 g/l, de préférence de 210 à 220 g/l.

7. Procédé selon une quelconque revendication précédente, dans lequel l'étape (iii) de mélange de la matière première de déchets textiles déchiquetée avec la solution aqueuse alcaline comprend un mélange à une température de 75 °C à 110 °C, de préférence de 85 °C à 105 °C, et/ou dans lequel l'étape (iii) de mélange de la matière première de déchets textiles déchiquetée avec la solution aqueuse alcaline est réalisée pendant 60 à 120 minutes.

8. Procédé selon une quelconque revendication précédente, dans lequel l'étape (v) de mélange de la matière première de déchets textiles déchiquetée traitée par alcalin avec la solution aqueuse acide est réalisée pendant 30 à 60 minutes et/ou comprend un mélange à une température allant jusqu'à 80 °C, de préférence jusqu'à 60 °C, et/ou à une température d'au moins 30 °C.

9. Procédé selon une quelconque revendication précédente, dans lequel la solution aqueuse acide comprend un oxydant, de préférence dans lequel l'oxydant est un ou plusieurs sélectionnés dans le groupe consistant en le peroxyde d'hydrogène, l'acide peracétique, le peroxyde de benzoyle, l'ozone, la chloramine, le dioxyde de chlore, et les sels de métaux alcalins de peroxyde, de perborate, de percarbonate, de persulfate, de permanganate, de dithionite et d'hypochlorite, de préférence dans lequel l'oxydant est un ou plusieurs parmi le dioxyde de chlore et l'hypochlorite de sodium.

10. Procédé selon une quelconque revendication précédente, dans lequel le procédé comprend en outre une étape consistant à laver la matière première de déchets textiles déchiquetée traitée par alcalin, de préférence à un pH de 7 à 8, et/ou dans lequel le procédé comprend en outre une étape consistant à laver la cellulose, de préférence à un pH de 6 à 8.

11. Procédé de fabrication de fibres textiles en viscose ou en lyocell, dans lequel la cellulose obtenue par le procédé selon une quelconque revendication précédente est utilisée comme matière première de fibres textiles.
